# EUROPÄISCHE PATENTANMELDUNG

(11) **EP 4 338 581 A1**
(43) Veröffentlichungstag der Anmeldung: **20.03.2024**
(21) Anmeldenummer: 23186613.8
(22) Anmeldetag: 20.07.2023
(51) Int. Cl.: A01F 12/44, F16J 15/16, F16J 15/50

(54) **SELBSTFAHRENDER MÄHDRESCHER**

(30) Priorität: 13.09.2022 DE 102022123258
(71) Anmelder: CLAAS Selbstfahrende Erntemaschinen GmbH, 33428 Harsewinkel (DE)
(72) Erfinder: LEHMBERG, Andreas, 33428 Harsewinkel (DE); HOLTMANN, Bernd, 48324 Sendenhorst (DE); HÖGEMANN, Jonas, 33428 Harsewinkel (DE)
(74) Vertreter: CLAAS Gruppe

(57) **Zusammenfassung**

Die vorliegende Erfindung betrifft einen selbstfahrenden Mähdrescher (1), umfassend eine von seitlichen Wandungen (25) zumindest abschnittsweise umgebene Reinigungsvorrichtung (13) mit zumindest einem durch einen Exzenterantrieb (31) oszillierend angetriebenen Sieb (19,20) und zumindest einer Verschwenkvorrichtung (32) zur gleichmäßigen Verteilung von Ernteguts auf dem zumindest einen Sieb (19, 20), wobei an dem zumindest einen Sieb (19, 20) in Querrichtung (y) des Mähdreschers (1) orientierte, im Wesentlichen stangenförmig oder stabförmig ausgebildete Bauteile (46) ortsfest angeordnet sind, die sich durch Öffnungen (35) der Wandungen (25) abschnittsweise hindurch erstrecken und deren freien Enden einen Angelpunkt bilden, wobei die sich mit dem zumindest einen Sieb (19, 20) oszillierend bewegenden Bauteile (46) gegenüber ihrer Öffnung (35) jeweils durch ein diese umschließendes, sich abschnittsweise in Längsrichtung der Bauteile (46) erstreckendes Dichtungselement (42) abgedichtet sind, welches mit einem der Wandung (25) zugewandten Ende (47) ortsfest an dieser angeordnet und mit seinem freien Ende (48) durch das jeweilige Bauteil (46) geführt ist.

## Beschreibung

Die vorliegende Erfindung betrifft einen selbstfahrenden Mähdrescher gemäß dem Oberbegriff des Anspruches 1.

Ein Mähdrescher der eingangs genannten Art ist aus der DE 10 2019 125 489 A1 bekannt. Dort ist ein selbstfahrender Mähdrescher mit von seitlichen Wandungen zumindest abschnittsweise umgebene Reinigungsvorrichtung offenbart, die mit zumindest einem oszillierend angetriebenen Sieb und zumindest einer Verschwenkvorrichtung zur gleichmäßigen Verteilung von Ernteguts auf dem zumindest einen Sieb ausgeführt ist. An dem zumindest einen Sieb sind in Querrichtung des Mähdreschers orientierte, im Wesentlichen stangenförmig oder stabförmig ausgebildete Bauteile ortsfest angeordnet, die sich durch Öffnungen einer Wandung abschnittsweise hindurch erstrecken und deren freien Enden einen Angelpunkt bilden. Die jeweilige Öffnung entspricht dabei im Wesentlichen einem Langloch mit ovaler Kontur. Die ortsfest an dem zumindest einen Sieb angeordneten Bauteile führen gegenüber der Öffnung Bewegungen in Längsrichtung, Querrichtung und Hochrichtung relativ zu den Wandungen aus. Insbesondere die Bewegungen in Querrichtung erfolgen sowohl in positiver als auch negativer Richtung der Wandungen. Die Öffnungsweite der Öffnungen in den Wandungen ist derart, dass die Bewegungen störungsfrei ausgeführt werden können. Zudem werden durch die gewählte Öffnungsweite der Öffnungen Fertigungstoleranzen in Längsrichtung, Querrichtung der Reinigungsvorrichtung berücksichtigt. Mit den Öffnungen im Maschinengehäuse geht einher, dass Erntegut durch diese hindurchtreten kann und sich unter anderem im Bereich der Verschwenkvorrichtung ablagert.

Aus der DE 42 15 239 C1 ist eine Dichtung zum Abdecken einer Öffnung in einem die Reinigungsvorrichtung umgebenden Maschinengehäuse bekannt, durch welche ein oszillierend angetriebener Schwingungsarm, der mit einem Ende am Sieb einer Reinigungsvorrichtung und mit einem anderen Ende am Maschinengehäuse angelenkt ist, geführt ist. Die den Schwingungsarm umschließende Dichtung bewegt sich zusammen mit dem Sieb, an dem die Dichtung befestigt ist. Damit die oszillierenden Bewegungen in Längsrichtung und Hochrichtung des Schwingungsarmes störungsfrei ausgeführt werden, weist die Dichtung eine größere Fläche auf als die Öffnung. Die Dichtung gleitet dabei auf der Oberfläche des Maschinengehäuses. Mit dieser Lösung zur Abdichtung der Öffnung gehen wesentliche Nachteile einher, zum einen ein erhöhter Verschleiß der Dichtung, dem im abrasiven Umfeld im Inneren des Mähdreschers durch die Materialauswahl nur begrenzt begegnet werden kann und zum anderen die Anordnung am Sieb, welche bei einem erforderlichen verschleißbedingten Austausch der Dichtung mit gro-ßem Aufwand verbunden ist. Ein weiterer Nachteil besteht darin, dass es bei einer Bewegung in Querrichtung auf einer Seite des Siebes zu einer Beabstandung der Dichtung gegenüber dem Maschinengehäuse kommt, was mit einer Spaltbildung einhergeht, sodass Erntegut hindurchtreten kann.

Ausgehend vom vorstehend genannten Stand der Technik liegt der Erfindung die Aufgabe zugrunde, einen selbstfahrenden Mähdrescher der eingangs genannten Art weiterzubilden, der die Nachteile des Standes der Technik vermeidet, insbesondere eine verbesserte Abdichtung, die spaltfreie Bewegungen eines Siebes relativ zum Maschinengehäuse in Querrichtung ermöglicht.

Diese Aufgabe wird durch einen selbstfahrenden Mähdrescher mit den Merkmalen des unabhängigen Anspruches 1 gelöst. Vorteilhafte Ausführungsformen und Weiterbildungen sind den hiervon abhängigen Ansprüchen zu entnehmen.

Gemäß Anspruch 1 wird ein selbstfahrender Mähdrescher vorgeschlagen, welcher eine von seitlichen Wandungen zumindest abschnittsweise umgebene Reinigungsvorrichtung mit zumindest einem durch einen Exzenterantrieb oszillierend angetriebenen Sieb und zumindest einer Verschwenkvorrichtung zur gleichmäßigen Verteilung von Erntegut auf dem zumindest einen Sieb umfasst, wobei an dem zumindest einen Sieb in Querrichtung des Mähdreschers orientierte, im Wesentlichen stangenförmig oder stabförmig ausgebildete Bauteile ortsfest angeordnet sind, die sich durch Öffnungen in den Wandungen abschnittsweise hindurch erstrecken und deren freie Enden einen Angelpunkt bilden. Erfindungsgemäß ist vorgesehen, dass die sich mit dem zumindest einen Sieb oszillierend bewegenden Bauteile gegenüber ihrer Öffnung jeweils durch ein diese umschließendes, sich abschnittsweise in Längsrichtung der Bauteile erstreckendes Dichtungselement abgedichtet sind, welches mit einem der Wandung zugewandten Ende ortsfest an diesem angeordnet und wobei das Dichtungselement mit seinem freien Ende durch das jeweilige Bauteil geführt ist. Ein wesentlicher Vorteil einer derartigen Struktur besteht darin, dass durch das Dichtungselement einerseits große Oszillationswege des Bauteils ausgeglichen werden können und das mit dem Sieb oszillierende Bauteil im durch diesen bewegten Teil des Dichtungselementes sicher gehalten wird.

Bei den seitlichen Wandungen kann es sich um Abschnitte des Maschinengehäuses oder um separate im Maschinengehäuse angeordnete Wandabschnitte handeln, welche die Reinigungsvorrichtung von anderen im Maschinengehäuse angeordneten Komponenten, zum Beispiel Antriebskomponenten, trennen.

Zur Aufhängung des zumindest einen Siebes können vordere Schwenkelemente und hintere Schwenkelemente vorgesehen sein, wobei das jeweilige Schwenkelement jeweils an einem der Bauteile frei schwenkbar gelagert ist. Hierzu können die im Wesentlichen stangenförmig oder stabförmig ausgebildeten Bauteile als an dem zumindest einen Sieb angeordnete Zapfen ausgeführt sein.

Insbesondere kann die Verschwenkvorrichtung Elemente zum Definieren einer Schwingrichtung des zumindest einen Siebes umfassen, welche zwischen dem zumindest einen Sieb und den Wandungen angeordnet sind, wobei ein Element der Verschwenkvorrichtung eines der ortsfesten Bauteile ist, welches als im Wesentlichen stangenförmiger oder stabförmiger Halter ausgeführt ist.

Bevorzugt kann das Dichtungselement aus einem elastischen Material bestehen, welches aufgrund seiner Elastizität die oszillierende Bewegung der ortsfesten Bauteile gegenüber der jeweiligen Öffnung ausgleicht. Insbesondere kann als elastisches Material des Dichtungselementes ein Kunststoffmaterial oder Gummi verwendet werden.

Weiter bevorzugt kann das Dichtungselement durch Faltung die oszillierende Bewegung des jeweiligen Bauteils gegenüber der Öffnung ausgleichen. Diese Ausgestaltung des Dichtungselementes hat den Vorteil, dass die Faltung die Oszillationswege ausgleichen kann, ohne dass es zu einer Überdehnung des Dichtungselementes kommt. Zudem ist diese Ausgestaltung besonders bauraumeffizient.

Insbesondere kann das Dichtungselement als ein Faltenbalg ausgeführt sein. Insbesondere kann der Faltenbalg eine sich in Längsrichtung des jeweiligen Bauteils verjüngende Form aufweisen. Besonders bevorzugt kann der Faltenbalg einen im Wesentlichen ringförmigen Querschnitt aufweisen. Dabei kann die Außenkontur des Faltenbalges im Querschnitt gesehen einem Kreis oder einem Oval entsprechen. Insbesondere kann der Faltenbalg im Wesentlichen konzentrisch zum Bauteil auf diesem angeordnet sein.

Gemäß einer bevorzugten Weiterbildung kann das ein jeweiliges Bauteil umgebende Dichtungselement mittels eines Halteelements auf der dem Sieb abgewandten Seite der seitlichen Wandungen lösbar befestigt sein. Dadurch wird eine Zugänglichkeit auf der der Reinigungsvorrichtung abgewandten Seite ermöglicht. Darüber hinaus kann das Halteelement dazu dienen, das aus einem elastischen Material bestehende Dichtungselement klemmend gegenüber der jeweiligen Wandung zu fixieren. Das Halteelement kann im Wesentlichen plattenförmig ausgeführt sein. Zur klemmenden Fixierung kann das Dichtungselement einen flanschförmigen Außenabschnitt aufweisen, welcher von dem Halteelement zumindest abschnittsweise überlappt wird. Das Halteelement besteht bevorzugt aus einem Metall. Der flanschförmige Abschnitt des Dichtungselementes kann Durchgangsbohrungen aufweisen. Im oder auf dem Halteelement können koaxial zu den Durchgangsbohrungen Innengewindeabschnitte vorgesehen sein. Die Durchgangsbohrungen und die Innengewindeabschnitte können der Befestigung des Halteelementes mittels Schraubverbindungen dienen.

Bevorzugt kann das Dichtungselement an seinem freien Ende ein integriertes Klemmelement umfassen, mit welchem das Dichtungselement form- und /oder kraftschlüssig auf dem jeweiligen Bauteil angeordnet ist. Durch die form- und /oder kraftschlüssige Verbindung des integrierten Klemmelementes und des jeweiligen Bauteils kann das Dichtungselement den Bewegungen des jeweiligen ortsfesten Bauteils folgen.

Hierzu kann das Klemmelement als ein Klemmring ausgeführt sein. Der Klemmring kann von einem flanschförmigen Abschnitt am freien Ende des Dichtungselementes formschlüssig aufgenommen sein. Insbesondere kann der Klemmring eine ringförmige Nut aufweisen, in die der flanschförmige Abschnitt eingreift.

Alternativ kann das Dichtungselement einen Endabschnitt aufweisen, der das Bauteil selbstspannend konzentrisch umschließt.

Insbesondere kann zur Sicherung der selbstspannenden konzentrischen Umschließung ein Spannring aus einem elastischem Werkstoff oder ein selbstsicherndes Spannelement, eine Schlauchklemme, eine Schlauchschelle oder dergleichen vorgesehen sein.

Weiter bevorzugt kann zwischen dem freien Ende des Dichtungselementes und einem am freien Ende des Bauteils angeordneten Gelenkbauteil ein, insbesondere ringförmiges, Distanzelement angeordnet sein. Durch das Distanzelement kann das Dichtungselement zu dem am freien Ende des Bauteils angeordneten Gelenkbauteil beabstandet gehalten werden.

Das Distanzelement kann zusammen mit dem Klemmelement als ein einstückiges Element ausgeführt sein. Eine Ausgestaltung von Klemmelement und Distanzelement als zwei separate Elemente kann ebenfalls vorgesehen sein. Die Bewegung des Klemmelementes und des daran angeordneten Dichtungselementes kann in Querrichtung, d.h. in Längsrichtung des Bauteils, durch das Distanzelement begrenzt werden.

Die vorliegende Erfindung wird nachstehend anhand eines in den Zeichnungen dargestellten Ausführungsbeispieles näher erläutert.

Es zeigen:
- Fig. 1: eine schematische Seitenansicht einer als Mähdrescher ausgeführten selbstfahrenden Erntemaschine;
- Fig. 2: eine Ansicht einer an einem oberen Siebkasten einer Reinigungsvorrichtung des Mähdreschers angeordneten Verschwenkvorrichtung, welche mittels einer Haltevorrichtung am Maschinengehäuse des Mähdreschers angeordnet ist;
- Fig. 3: eine Teilansicht des oberen Siebkastens;
- Fig. 4: eine Schnittansicht der Verschwenkvorrichtung mit einem Dichtungselement gemäß Fig. 2; und
- Fig. 5A, 5B: eine Ansicht des Dichtungselementes gemäß Fig. 4 von A) schräg vorne und B) schräg hinten.

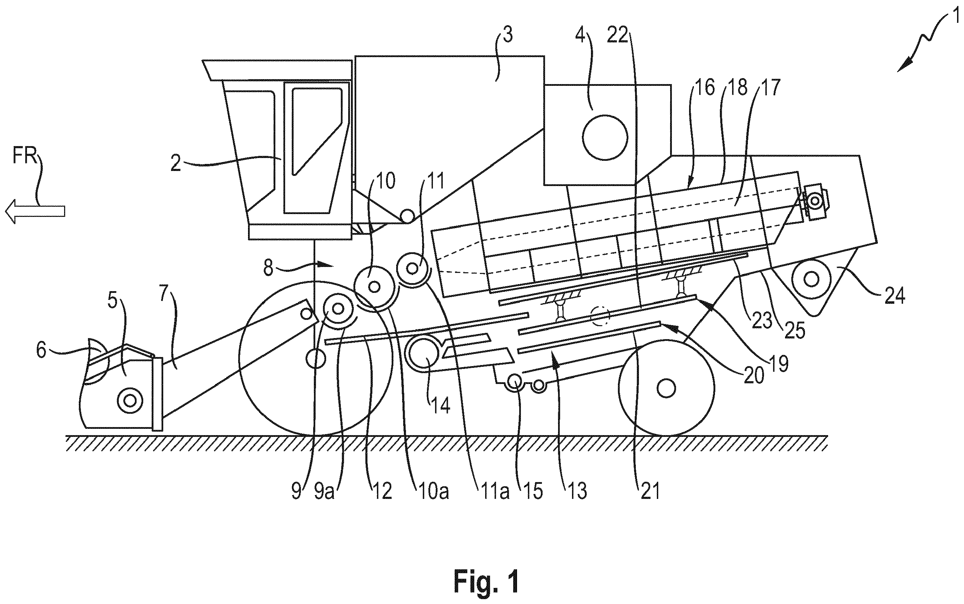

In Fig. 1 ist schematisch eine Seitenansicht eines selbstfahrenden Mähdreschers 1 dargestellt, der eine Fahrerkabine 2, einen hinter dieser liegenden Korntank 3 sowie anschließend an diesen einen Verbrennungsmotor 4 aufweist. Weiterhin nimmt der selbstfahrende Mähdrescher 1 in seinem Frontbereich einen Erntevorsatz 5 auf. Der Erntevorsatz 5 erfasst das zu erntende Halmgut mit einer Haspel 6 und schneidet es mittels einer nicht dargestellten Mähvorrichtung bodennah ab. Das Erntegut gelangt vom Erntevorsatz 5 durch einen Schrägförderer 7 zu einer Dresch- und Trenneinrichtung 8. Diese Dresch- und Trenneinrichtung 8 ist als Mehrtrommelanordnung eines Tangentialdreschwerks ausgebildet und besteht aus einer Vorbeschleunigungstrommel 9, einer Dreschtrommel 10 und einer Zuführtrommel 11. Diesen Trommeln 9, 10 und 11 sind jeweils Abscheidekörbe 9a, 10a und 11a zugeordnet. Das ausgedroschene Erntegut gelangt durch die Abscheidekörbe 9a, 10a und 11a auf einen Vorbereitungsboden 12. Vom Vorbereitungsboden 12 wird das ausgedroschene Erntegut einer Reinigungsvorrichtung 13 zugeführt. Die Reinigungsvorrichtung 13 umfasst ein Reinigungsgebläse 14 sowie ein Obersieb 19 und ein Untersieb 20, die jeweils oszillierend angetrieben sind. Das Obersieb 19 ist in einem oberen Siebkasten 22, das Untersieb 20 in einem unteren Siebkasten 21 angeordnet. Das Reinigungsgebläse 14 wirkt mit dem Obersieb 19 und dem Untersieb 20 zusammen, welches im Bereich der Siebe einen Luftstrom erzeugt, wodurch Spreu und Kurzstroh abgeschieden und aus dem Mähdrescher 1 herausbefördert werden. Das durch die Siebe 19, 20 der Reinigungsvorrichtung 13 hindurchtretende gereinigte Erntegut gelangt in eine Querförderschnecke 15, die das Erntegut zu einem mit dem Korntank 3 verbundenen, nicht dargestellten Körnerelevator transportiert.

Sämtliche Anteile des Ernteguts, welches die Abscheidekörbe 9a, 10a und 11a nicht in Richtung des Vorbereitungsbodens 12 passiert haben und bei denen es sich um Stroh, Kurzstroh, Ähren und gegebenenfalls Grannen handelt, werden mittels der Zuführtrommel 11 einer Einrichtung 16 zur Restkornabscheidung zugeführt. Diese Einrichtung 16 zur Restkornabscheidung weist bei dem in der Fig. 1 dargestellten Mähdrescher 1 einen in Längsrichtung des Mähdreschers 1 verlaufenden Trennrotor 17 auf. In einer alternativen Ausführung kann der Mähdrescher 1 jedoch auch mit Hordenschüttlern als Einrichtung 16 zur Restkornabscheidung ausgeführt sein. Der Trennrotor 17 ist weiterhin radial von einem Abscheidegehäuse 18 umschlossen, welches in seinem unteren Bereich nicht näher dargestellte Abscheideöffnungen aufweist und im oberen Bereich geschlossen, also undurchlässig ist. Durch die Abscheideöffnungen des Abscheidegehäuses 18 gelangen Restkorn, Spreu, Ähren und eventuell Kurzstroh auf einen Rücklaufboden 23, der diese Bestandteile der Reinigungseinrichtung 13 zuführt. Die Bestandteile dieses Erntegutstromes, die von den Sieben 19, 20 der Reinigungsvorrichtung 13 abgeschieden werden, gelangen in eine Förderschnecke, die diese Bestandteile des Ernteguts einer an sich bekannten und daher nicht näher dargestellten Überkehr zuführt. Die Überkehr fördert diese Bestandteile des Ernteguts zurück in die Dresch- und Trenneinrichtung 8. Das durch den Trennrotor 17 geförderte Stroh verlässt diesen an dessen hinterem Ende, wo das Stroh in einen Strohhäcksler 24 gelangt oder als Schwad auf dem Boden abgelegt werden kann. Die Arbeitsaggregate des Mähdreschers 1 sind von einem Maschinengehäuse umgeben.

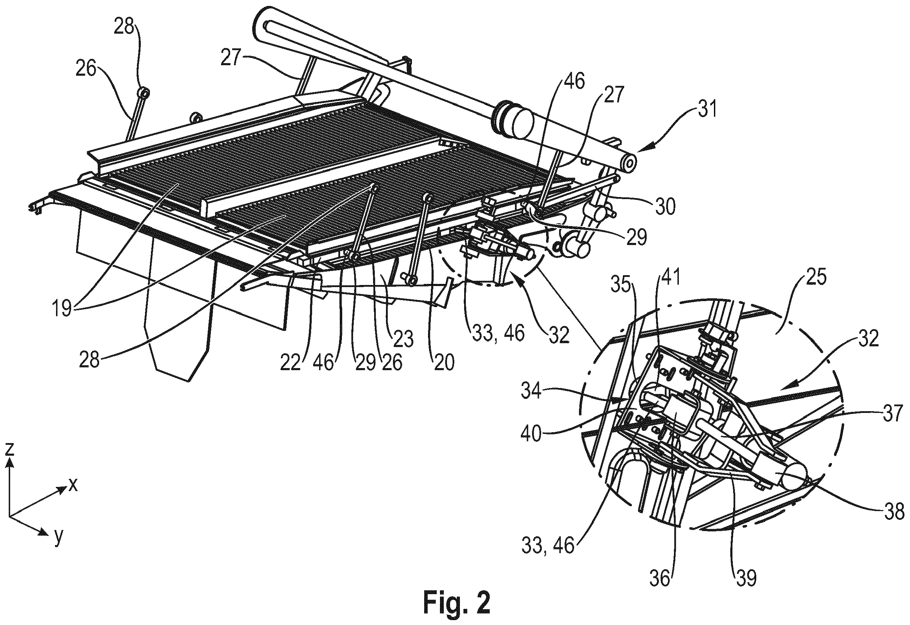

In Fig. 2 ist eine Ansicht einer an dem oberen Siebkasten 22 der Reinigungsvorrichtung 13 des Mähdreschers 1 angeordneten Verschwenkvorrichtung 32 dargestellt, welche mittels einer Haltevorrichtung 34 an einer seitlichen Wandung 25 im Innern des Mähdreschers 1 angeordnet ist. Die einander gegenüberliegenden seitlichen Wandungen 25 umgeben die Reinigungsvorrichtung 13 zumindest abschnittsweise. Fig. 2 zeigt den oberen Siebkasten 22, welcher das Obersieb 19 haltert und den unteren Siebkasten 21, welcher das Untersieb 20 haltert. Der obere Siebkasten 22 ist an vorderen Schwenkelementen 26 und hinteren Schwenkelementen 27 aufgehängt, die jeweils mit ihren oberen Enden mittels an den Wandungen 25 gekoppelten Halterungen 28 frei schwenkbar gelagert sind und an ihren unteren Enden mittels Gelenkbauteilen 29 ebenfalls um stangenförmig oder stabförmig ausgebildete Bauteile 46 frei schwenkbar am oberen Siebkasten 22 gelagert sind. Der untere Siebkasten 21 kann in vergleichbarer Weise aufgehängt sein. Die Bauteile 46 sind ortsfest am oberen Siebkasten 22 angeordnet. Die Bauteile 46, an denen die vorderen Schwenkelemente 26 und die hinteren Schwenkelemente 27 angelenkt sind, sind im Wesentlichen zapfenförmig ausgebildet. Eine Kurbelstange 30 verbindet den oberen Siebkasten 22 mit einem an sich bekannten und daher nicht näher erläuterten Exzenterantrieb 31. Mittels des Exzenterantriebs 31 wird das Obersieb 19 zum hin- und herschwingen angeregt.

Die Verschwenkvorrichtung 32 weist einen Halter 33 auf, der ortsfest mit dem oberen Siebkasten 22 verbunden ist. Der Halter 33 stellt ebenfalls ein im Wesentlichen stangenförmig oder stabförmig ausgebildetes Bauteil 46 dar, welches ortsfest am oberen Siebkasten 22 angeordnet ist. Die vergrößert dargestellte Detailansicht zeigt die Verschwenkvorrichtung 32 und einen Ausschnitt des Maschinengehäuses, an dem die Verschwenkvorrichtung 32 mittels der Haltevorrichtung 34 mittelbar oder unmittelbar angeordnet ist. Die Verschwenkvorrichtung 32 ist an einer der seitlichen Wandungen 25 angeordnet. Bei den seitlichen, d.h. sich in Fahrtrichtung FR erstreckenden, Wandungen 25 kann es sich einen Abschnitt des Maschinengehäuses oder einen separaten, im Maschinengehäuse angeordneten Wandabschnitt handeln, welcher die Reinigungsvorrichtung 13 von anderen im Maschinengehäuse angeordneten Komponenten trennt.

Die Haltevorrichtung 34 weist eine flächige Tragseite 40 mit einer mittig auf dieser befindlichen im Wesentlichen ovale Öffnung 41 auf. Die Tragseite 40 ist ortsfest an der seitlichen Wandung 25 angeordnet, beispielsweise mittels einer Schraubverbindung.

Der Halter 33 der Verschwenkvorrichtung 32 ist an einem Ende ortsfest mit einer sich im Wesentlichen in Fahrtrichtung FR erstreckenden Längsseite des oberen Siebkastens 22 verbunden, beispielsweise mittels einer Schraubverbindung. In der Wandung 25 ist eine als Langloch ausgebildete, insbesondere im Wesentlichen ovale, Öffnung 35 vorgesehen, durch welche der Halter 33 nach außen ragt. Hierzu ist die Öffnung 41 der Haltevorrichtung 24 die Öffnung 35 überlagernd angeordnet. Das freie Ende des Halters 33, welches durch die Öffnung 35 in der Wandung 25 und die Öffnung 41 der Tragseite 40 hindurchragt, ist mittels eines Gelenkbauteils 36, insbesondere eines Metallgummilagers, an einem Ende einer Schwenkstange 37 drehbeweglich angeordnet. Das Gelenkbauteil 36 erlaubt eine Drehbewegung des Halters 33 gegenüber der Schwenkstange 37 mit im Wesentlichen drei rotatorischen Freiheitsgraden. Die Schwenkstange 37 ist wiederum mit ihrem gegenüberliegenden Ende drehbeweglich mittels eines zweiten Gelenkbauteils 38, welches ebenfalls bevorzugt als Metallgummilager ausgeführt ist, an einer mehrteilig ausgeführten Schwenkgabel 39 angeordnet. Details zur Ausgestaltung und Funktionsweise der Verschwenkvorrichtung 32 sind der DE 10 2019 125 489 A1 zu entnehmen, die vollumfänglich in den Offenbarungsgehalt der vorliegenden Anmeldung einbezogen wird.

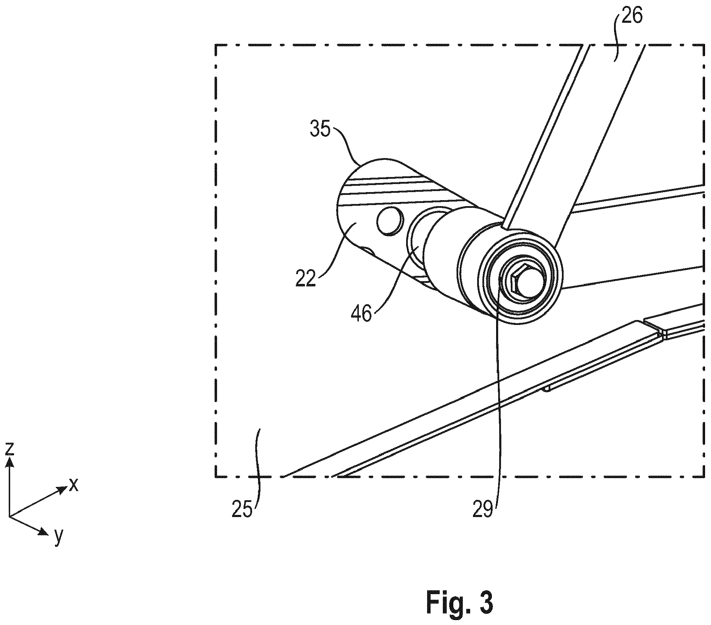

Fig. 3 zeigt exemplarisch eine Teilansicht eines der am oberen Siebkasten 22 angelenkten vorderen Schwenkelemente 26. Das stangenförmig oder stabförmig ausgebildete Bauteil 46 erstreckt sich abschnittsweise in Querrichtung y durch die Öffnung 35 in der Wandung 25 hindurch. Auf der der Wandung 25 abgewandten Seite ist ein Gelenkbauteil 29 angeordnet, mittels dem das vordere Schwenkelement 26 am freien Ende des ortsfesten Bauteils 46 angelenkt ist. Das Gelenkbauteil 29 kann als ein Metallgummilager ausgeführt sein.

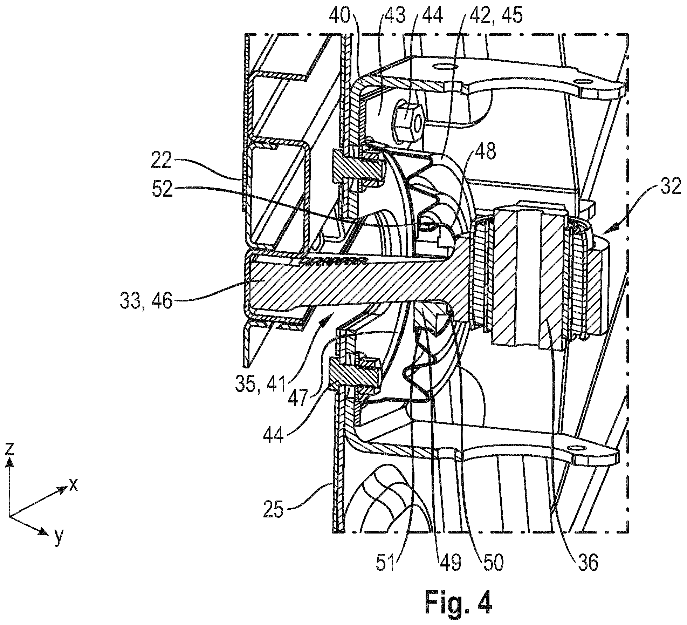

In Fig. 4 ist eine Schnittansicht eines Teils der Verschwenkvorrichtung 32 gemäß Fig. 2 mit einem Dichtungselement 42 dargestellt. Das Dichtungselement 42 dient dazu, die Öffnung 41 in der Tragseite 40 sowie die dahinter befindliche Öffnung 35 in der Wandung 25 abzudichten. Dabei muss gewährleistet sein, dass das Dichtungselement 42 den oszillierenden Bewegungen des Halters 33 folgen kann. Der Halter 33 führt schwingende Bewegungen in Längsrichtung x, Querrichtung y sowie z-Richtung aus. Hierzu kann das Dichtungselement 42 aus einem elastischen Material besteht, welches aufgrund seiner Elastizität die oszillierende Bewegung des Halters 33 gegenüber den einander überlappenden Öffnungen 35, 41 ausgleicht. Insbesondere kann als elastisches Material des Dichtungselementes 42 ein Kunststoffmaterial oder Gummi verwendet werden.

Hierzu ist der sich mit dem Obersieb 19 oszillierend bewegende Halter 33 gegenüber der Öffnung 35 durch das den Halter 33 umschließende, sich in Längsrichtung des Halters 33 erstreckende Dichtungselement 42 abgedichtet, welches mit einem der Wandung 25 zugewandten Ende 47 ortsfest an dieser angeordnet und mit seinem gegenüberliegenden freien Ende 48 durch den Halter 33 geführt ist.

Gemäß dem in Fig. 4 dargestellten Ausführungsbeispiel ist das Dichtungselement 42 als ein Faltenbalg 45 ausgebildet. Durch die Faltung des Faltenbalges 45 kann die oszillierende Bewegung des Halters 33 gegenüber den Öffnungen 35 in der Wandung 25 und der Öffnung 41 in der Tragseite 40 ausgeglichen werden.

Der Faltenbalg 45 ist mittels eines im Wesentlichen plattenförmigen Halteelements 43 an dem Halter 33 der Verschwenkvorrichtung 32 auf der dem Obersieb 19 abgewandten Seite der seitlichen Wandung 25 lösbar befestigt. Das Halteelement 43 ist vorzugsweise mittels Schraubverbindungen 44 lösbar befestigt.

Das Dichtungselement 42 umfasst an seinem freien Ende 48 ein integriertes Klemmelement 49. Das Klemmelement 49 ist im Wesentlichen hohlzylindrisch ausgeführt. Das Klemmelement 49 dient dazu, das Dichtungselement 42 auf dem Halter 33 anzuordnen. Zugleich überträgt das Klemmelement 49 Bewegungen des Halters 33 auf das Dichtungselement 42. Für die Montage kann das Klemmelement 49 beispielsweise zweiteilig ausgebildet sein. Alternativ kann das Klemmelement 49 einem Sprengring entsprechend ausgebildet sein, um diesen auf den Halter 33 aufschieben zu können.

Der Halter 33 kann zwischen seinem am Obersieb 19 befestigten Ende und dem am gegenüberliegenden Ende angeordneten Gelenkbauteil 36 einen im Wesentlichen konisch verlaufenden Abschnitt aufweisen. Das Klemmelement 49 umschließt den abschnittsweise konisch ausgeführten Abschnitt des Halters 33 im Bereich seines geringsten Außenumfanges. Auf der dem Gelenkbauteil 36 zugewandten Seite des Klemmelementes 49 ist ein Distanzelement 50 angeordnet. Durch das Distanzelement 50 kann das Dichtungselement 42 zu dem am freien Ende des Halters 33 angeordneten Gelenkbauteil 36 beabstandet gehalten werden. Gemäß dem dargestellten Ausführungsbeispiel sind das Klemmelement 49 und das Distanzelement 50 als ein einstückiges Element ausgeführt. Die Bewegung des Klemmelementes 49 und des daran angeordneten Dichtungselementes 42 wird in Querrichtung y, d.h. in Längsrichtung des Halters 33, durch das Distanzelement 50 sowie den zunehmenden Außenumfang des Halters 33 begrenzt.

Während das der Wandung 25 zugewandte Ende 47 des Dichtungselementes 42 gegenüber den Öffnungen 35, 41 in seiner Lage unverändert bleibt, bewegt sich das gegenüberliegende freie Ende 48 des Dichtungselementes 42 aufgrund der von dem Halter 33 übertragenen Bewegungen mit. Die Ausführung des Dichtungselementes 42 als Faltenbalg 45 bewirkt durch die Faltung, dass die oszillierende Bewegung des Halters 33 gegenüber den überlappenden Öffnungen 35, 41 ausgeglichen wird. Diese Ausführung des Dichtungselementes 42 hat den Vorteil, dass die Faltung die Oszillationswege ausgleichen kann, ohne dass es zu einer Überdehnung des Dichtungselementes 42 kommt. Zudem ist diese Ausgestaltung besonders bauraumeffizient, wie aus Fig. 4 ersichtlich ist.

Zur form- und/oder kraftschlüssigen Anordnung des Dichtungselementes 42 kann das Klemmelement 49 eine ringförmige Nut 51 aufweisen, in welche ein wulstförmiger Abschnitt 52 des Dichtungselementes 42 formschlüssig eingreift.

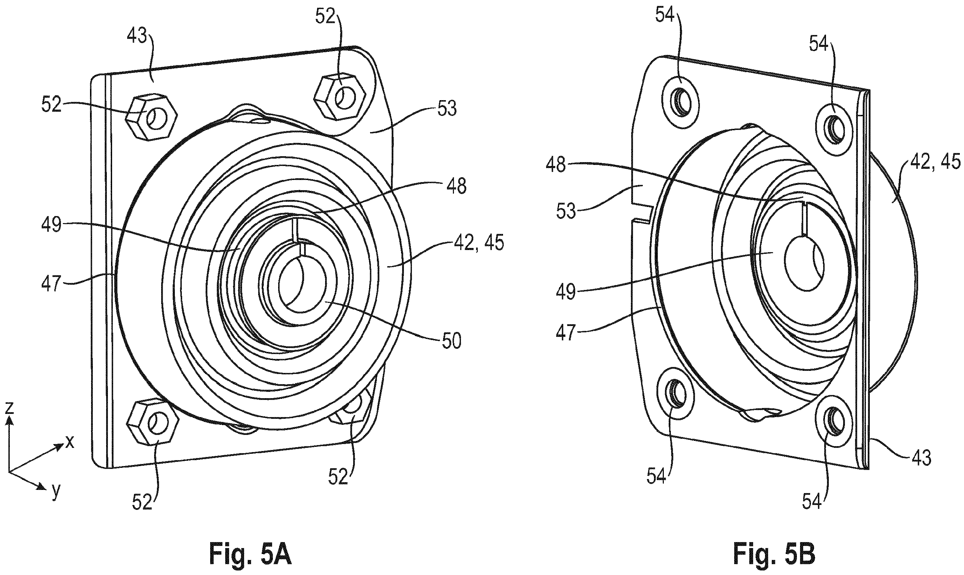

Die Darstellung in Fig. 5A zeigt eine Ansicht des Dichtungselementes 42 von schräg vorne und in Fig. 5B von schräg hinten. Auf der Oberfläche des im Wesentlichen plattenförmigen Halteelements 43 können in den Eckbereichen Innengewindeabschnitte 52 befestigt sein, die Teil der Schraubverbindungen 44 sind. Das Halteelement 43 ist, in Draufsicht gesehen, im Wesentlichen C-förmig ausgeführt. Zur klemmenden Fixierung kann das Dichtungselement 42 einen flanschförmigen Außenabschnitt 53 aufweisen, welcher von dem im Wesentlichen plattenförmigen Halteelement 43 zumindest abschnittsweise überlappt wird. Koaxial zu den Innengewindeabschnitten 52 des Halteelementes 43 sind in den flanschförmigen Außenabschnitt 53 des Dichtungselementes 42 ringförmige Stützelemente 54 eingefügt, welche aus einem anderen, insbesondere einem druckstabilerem Material, als das Dichtungselement 42 bestehen.

Das als Faltenbalg 45 ausgeführte Dichtungselement 42 ist gleichfalls zu Abdichtung der Öffnungen 35 in den Wandungen 25 vorgesehen, durch die sich die Bauteile 46 abschnittsweise erstrecken, an denen die vorderen Schwenkelemente 26 und hinteren Schwenkelemente 27 angelenkt sind.

### Bezugszeichenliste

| | | | |
|---|---|---|---|
| 1 | Mähdrescher | 31 | Exzenterantrieb |
| 2 | Kabine | 32 | Verschwenkvorrichtung |
| 3 | Korntank | 33 | Halter |
| 4 | Verbrennungsmotor | 34 | Haltevorrichtung |
| 5 | Erntevorsatz | 35 | Öffnung |
| 6 | Haspel | 36 | Gelenkbauteil |
| 7 | Schrägförderer | 37 | Schwenkstange |
| 8 | Dresch- und Trenneinrichtung | 38 | Gelenkbauteil |
| 9 | Vorbeschleunigungstrommel | 39 | Schwenkgabel |
| 10 | Dreschtrommel | 40 | Tragseite |
| 11 | Zuführtrommel | 41 | Öffnung |
| 9a | Abscheidekorb | 42 | Dichtungselement |
| 10a | Abscheidekorb | 43 | Haltelement |
| 11a | Abscheidekorb | 44 | Schraubverbindung |
| 12 | Vorbereitungsboden | 45 | Faltenbalg |
| 13 | Reinigungsvorrichtung | 46 | Ortsfestes Bauteil |
| 14 | Reinigungsgebläse | 47 | Ende von 42 |
| 15 | Querförderschnecke | 48 | Freies Ende von 42 |
| 16 | Einrichtung zur Restkornabscheidung | 49 | Klemmelement |
| 17 | Trennrotor | 50 | Distanzelement |
| 18 | Abscheidegehäuse | 51 | Nut |
| 19 | Obersieb | 52 | Innengewindeabschnitte |
| 20 | Untersieb | 53 | Außenabschnitt |
| 21 | Unterer Siebkasten | 54 | Stützelement |
| 22 | Oberer Siebkasten | | |
| 23 | Rücklaufboden | FR | Fahrtrichtung |
| 24 | Strohhäcksler | x | Längsrichtung |
| 25 | Seitliche Wandung | y | Querrichtung |
| 26 | Vorderes Schwenkelement | z | Hochrichtung |
| 27 | Hinteres Schwenkelement | | |
| 28 | Halterung | | |
| 29 | Gelenkbauteil | | |
| 30 | Kurbelstange | | |

## Patentansprüche

1. Selbstfahrender Mähdrescher (1), umfassend eine von seitlichen Wandungen (25) zumindest abschnittsweise umgebene Reinigungsvorrichtung (13) mit zumindest einem durch einen Exzenterantrieb (31) oszillierend angetriebenen Sieb (19,20) und zumindest einer Verschwenkvorrichtung (32) zur gleichmäßigen Verteilung von Ernteguts auf dem zumindest einen Sieb (19, 20), wobei an dem zumindest einen Sieb (19, 20) in Querrichtung (y) des Mähdreschers (1) orientierte, im Wesentlichen stangenförmig oder stabförmig ausgebildete Bauteile (46) ortsfest angeordnet sind, die sich durch Öffnungen (35) der Wandungen (25) abschnittsweise hindurch erstrecken und deren freie Enden einen Angelpunkt bilden, **dadurch gekennzeichnet, dass** die sich mit dem zumindest einen Sieb (19, 20) oszillierend bewegenden Bauteile (46) gegenüber ihrer jeweiligen Öffnung (35) durch ein diese umschließendes, sich abschnittsweise in Längsrichtung der Bauteile (46) erstreckendes Dichtungselement (42) abgedichtet sind, welches mit einem der Wandung (25) zugewandten Ende (47) ortsfest an dieser angeordnet und mit seinem freien Ende (48) durch das jeweilige Bauteil (46) geführt ist.

2. Selbstfahrender Mähdrescher (1) nach Anspruch 1, **dadurch gekennzeichnet, dass** zur Aufhängung des zumindest einen Siebes (19, 20) vordere Schwenkelemente (26) und hintere Schwenkelemente (27) vorgesehen sind, wobei das jeweilige Schwenkelement (26, 27) jeweils an einem der Bauteile (46) frei schwenkbar gelagert ist.

3. Selbstfahrender Mähdrescher (1) nach Anspruch 1 oder 2, **dadurch gekennzeichnet, dass** die Verschwenkvorrichtung (32) Elemente zum Definieren einer Schwingrichtung des zumindest einen Siebes (19) umfasst, welche zwischen dem Sieb (19) und den seitlichen Wandungen (25) angeordnet sind, wobei ein Element der Verschwenkvorrichtung (32) eines der ortsfesten Bauteile (46) ist, welches als im Wesentlichen stangenförmiger oder stabförmiger Halter (33) ausgeführt ist.

4. Selbstfahrender Mähdrescher (1) nach einem der Ansprüche 1 bis 3, **dadurch gekennzeichnet, dass** das Dichtungselement (42) aus einem elastischen Material besteht, welches aufgrund seiner Elastizität die oszillierende Bewegung des Bauteils (46) gegenüber der jeweiligen Öffnung (35) in den Wandungen (25) ausgleicht.

5. Selbstfahrender Mähdrescher (1) nach einem der Ansprüche 1 bis 4, **dadurch gekennzeichnet, dass** das Dichtungselement (42) durch Faltung die oszillierende Bewegung des Bauteils (46) gegenüber der jeweiligen Öffnung (35) in den Wandungen (25) ausgleicht.

6. Selbstfahrender Mähdrescher (1) nach einem der Ansprüche 1 bis 5, **dadurch gekennzeichnet, dass** das Dichtungselement (42) als ein Faltenbalg (45) ausgeführt ist.

7. Selbstfahrender Mähdrescher (1) nach einem der Ansprüche 1 bis 6, **dadurch gekennzeichnet, dass** das ein jeweiliges Bauteil (46) umgebende Dichtungselement (42) mittels eines Halteelements (43) auf der dem Sieb (19) abgewandten Seite der seitlichen Wandungen (25) lösbar befestigt ist.

8. Selbstfahrender Mähdrescher (1) nach einem der Ansprüche 1 bis 7, **dadurch gekennzeichnet, dass** das Dichtungselement (42) an seinem freien Ende (48) ein integriertes Klemmelement (49) umfasst, mit welchem das Dichtungselement (42) auf dem jeweiligen Bauteil (46) angeordnet ist.

9. Selbstfahrender Mähdrescher (1) nach Anspruch 8, **dadurch gekennzeichnet, dass** das Klemmelement (49) als ein Klemmring ausgeführt ist.

10. Selbstfahrender Mähdrescher (1) nach einem der Ansprüche 1 bis 9, **dadurch gekennzeichnet, dass** das Dichtungselement (42) einen Endabschnitt aufweist, der das Bauteil (46) selbstspannend konzentrisch umschließt.

11. Selbstfahrender Mähdrescher (1) nach Anspruch 10, **dadurch gekennzeichnet, dass** zur Sicherung der selbstspannenden konzentrischen Umschließung ein Spannring aus einem elastischem Werkstoff oder ein selbstsicherndes Spannelement vorgesehen ist.

12. Selbstfahrender Mähdrescher (1) nach einem der Ansprüche 1 bis 11, **dadurch gekennzeichnet, dass** zwischen dem freien Ende (48) des Dichtungselementes (42) und einem am freien Ende (48) des jeweiligen Bauteils (46) angeordneten Gelenkbauteil (29, 36) ein Distanzelement (50) angeordnet ist.

13. Selbstfahrender Mähdrescher (1) nach Anspruch 12, **dadurch gekennzeichnet, dass** das Distanzelement (50) am Klemmelement (49) angeordnet ist.

14. Selbstfahrender Mähdrescher (1) nach Anspruch 12 oder 13, **dadurch gekennzeichnet, dass** das Klemmelement (49) und das Distanzelement (50) als ein einstückiges Element oder als zwei separate Elemente ausgeführt ist bzw. sind.
